# EUROPEAN PATENT SPECIFICATION

(11) **EP 0 558 265 B1**
(45) Date of publication and mention of the grant of the patent: **10.05.2000**
(21) Application number: 93301310.4
(22) Date of filing: 23.02.1993
(51) Int. Cl.: C08L 69/00, C08L 55/02

(54) **Low gloss polycarbonate/ABS blends**
Polycarbonat-ABS-Mischungen mit schwachem Glanz
Compositions de polycarbonate et d'ABS de faible brillance

(30) Priority: 28.02.1992 US 843663
(43) Date of publication of application: 01.09.1993
(73) Proprietor: GENERAL ELECTRIC COMPANY, Schenectady, NY 12345 (US)
(72) Inventor: Vilasagar, Shripathy, Parkersburg, West Virginia 26101 (US)
(74) Representative: Szary, Anne Catherine, Dr.

(56) References cited:
- EP-A- 0 331 970
- FR-A- 2 371 485
- US-A- 4 526 926

## Description

The present invention relates to blends of aromatic polycarbonate resin and ABS resin, and more particularly relates to low gloss aromatic polycarbonate/ABS blends containing carboxy functional-styrene-acrylonitrile polymer.

Blends of polycarbonate resin and ABS resin are known, see for example, German Patent 1,170,141 - many polycarbonate resin/ABS resin blends however exhibit high levels of gloss while in various applications it is desired that the blends exhibit low surface gloss.

EP-A-0331970 discloses a polymer blend composition comprising polycarbonate, styrene-acrylonitrile-maleic anhydride terpolymer and an ABS resin.

FR-A-2371485 discloses a thermoplastic molding composition comprising a polycarbonate, a graft copolymer, such as ABS, and a styrene-acrylonitrile-maleic anhydride terpolymer.

US-A-4526926 discloses a low gloss composition comprising a polycarbonate and a rubber modified copolymer such as an ABS resin. Alpha-beta-ethylenically unsaturated acids may also be used as a graft monomer.

The present invention provides low surface gloss PC/ABS blends. The blends comprise aromatic polycarbonate resin, a graft copolymer which is preferably an ASS resin, and an amount of a carboxy functional-styrene-acrylonitrile polymer sufficient to reduce the gloss of the blend.

The polymer blend compositions of the invention comprise an aromatic polycarbonate resin, an ABS resin and a styrene-acrylonitrile polymer having carboxy groups. The blends exhibit a relatively low level of gloss compared to similar blends lacking the carboxy functional-styrene-acrylonitrile polymer.

The polycarbonate component included in the blend compositions may be any aromatic homo-polycarbonate or co-polycarbonate known in the art. The polycarbonate component may be prepared in accordance with any of the processes generally known in the art, for example, by the interfacial polycondensation process, polycondensation in a homogeneous phase or by transesterification. These processes and the associated reactants, polymers, catalysts, solvents and conditions are well known in the art and are described in U.S. Pat. Nos. 2,964,974; 2,970,137; 2,999,835; 2,999,846; 3,028365; 3,153,008; 3,187,065; 3,215,668; 3,258,414 and 5,010,162, all of which are incorporated herein by reference. Suitable polycarbonates are based, for example, on one or more of the following bisphenols: dihydroxy diphenyls, bis-(hydroxyphenyl)-alkanes, bis-(hydroxyphenyl)-cycloalkanes, bis-(hydroxyphenyl)sulphides, bis-(hydroxyphenyl)-ethers, bis-(hydroxyphenyl)-ketones, bis-(hydroxyphenyl)-sulphoxides, bis-(hydroxyphenyl)-sulphones, alkyl cyclohexylidene bisphenols, a,a-bis-(hydroxyphenyl)diisopropyl benzenes, and their nucleus-alkylated and nucleus-halogenated derivatives, and mixtures thereof.

Specific examples of these bisphenols are 4, 4'-dihydroxy diphenyl, 2, -bis-(4-hydroxyphenyl)-propane, 2, 4-bis-(4-hydroxyphenyl)-2-methyl butane, 1, 1-bis-(4-hydroxyphenyl)-cyclohexane, a,a-bis-(4-hydroxyphenyl)-diisopropyl benzene, 2, 2-bis(3-methyl-4-hydroxyphenyl)propane, 2, 2-bis-(3-chloro-4-hydroxyphenyl)propane, 2, 2-bis-(3-chloro-4-hydroxyphenyl)propane, bis-(3, 5-dimethyl-4-hydroxyphenyl)-methane, 2, 2-bis-(3,5-dimethyl-4-hydroxyphenyl)-propane, bis-(3, 5-dimethyl-4-hydroxyphenyl)-sulphone, 2, 4-bis-(3, 5-dimethyl-4-hydroxyphenyl)-2-methyl butane, 1, 1-bis-(3, 5-dimethyl-4-hydroxyphenyl)-cyclohexane, a,a-bis-(3, 5-dimethyl-4-hydroxyphenyl)-p-diisopropyl benzene, 2, 2-bis-(3, 5-dichloro-4-hydroxyphenyl)-propane and 2, 2-bis-(3, 5-dibromo-4-hydroxyphenyl)-propane. A particular preferred bisphenol is 2, 2-bis-(4-hydroxyphenyl)-propane, more commonly known as bisphenol A. The bisphenols may be reacted with phosgene to produce the aromatic polycarbonates.

The ABS resin comprises a rigid graft polymer grafted to a diene rubber substrate. In a preferred embodiment, the rigid graft polymer is formed from styrene and acrylonitrile and the diene rubber substrate comprises polybutadiene. Additionally, the ABS resin may include diene rubbers other than polybutadiene as is well known in the art. In the context of the present application, reference to the ABS resin component will also include these equivalent polymers. It is noted, however, that ABS resin comprising a rigid graft polymer comprising styrene and acrylonitrile grafted to polybutadiene is the preferred ABS resin. In this preferred embodiment, it is further preferred that the weight ratio of styrene to acrylonitrile in the rigid graft portion of the ABS resin is in the range of about 1:1 to about 5:1 so that the amount of styrene is equal to or greater than the amount of acrylonitrile included in the graft portion. The ABS resin component may be prepared according to methods also well known in the art. As is known in the art, methods of producing ABS resin may result in a product comprising a mixture of ABS graft and ungrafted styrene-acrylonitrile copolymer. These mixtures are also suitable for use in the invention.

The ABS graft copolymer which is included in the compositions of the invention comprises a rubber substrate and a grafted portion grafted to the rubber substrate. The rubber substrate is formed from at least one diene monomer of the formula: 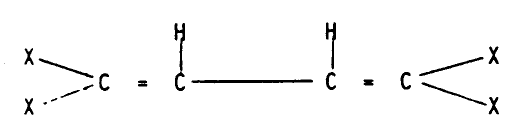 wherein X is selected from the group consisting of hydrogen, alkyl groups containing from 1 to 5 carbon atoms, chlorine and bromine. Examples of the diene monomer include butadiene, isoprene, 1,3-heptadiene, methyl-1, 3-pentadiene, 2-ethyl-1,3-pentadiene, mixtures thereof and the like. Preferably, the diene monomer comprises butadiene, wherein the rubber substrate comprises a polybutadiene substrate. Alternatively, at least one additional styrene monomer may be included in the rubber substrate, thereby forming, for example, a styrene-butadiene rubber substrate. Although the graft copolymer may include the rubber substrate and the grafted portion in any ratio which is desired, it is preferred that the graft copolymer comprises rubber substrate at a level of at least 10 weight percent based on the total weight of the graft copolymer, and more preferably at least 20 weight percent thereof. In a preferred embodiment, the ABS graft copolymer comprises diene rubber substrate at a level of from about 40 to about 75 weight percent based on the total weight of the ABS graft copolymer, and more preferably about 50 to about 60 weight percent thereof.

The grafted portion of the graft copolymer is preferably formed from at least one styrene monomer and at least one additional monomer. The at least one styrene monomer may comprise unsubstituted styrene monomer, or mixtures thereof. Substituted styrene monomers may include substituents on the aromatic portion and/or the vinyl portion, with preferred substituents being selected from the group consisting of alkyl groups of from 1 to 5 carbon atoms and halogen atoms such as chlorine and bromine. Preferred styrene monomers include unsubstituted styrene, alphamethylstyrene, dibromostyrene, and mixtures thereof. The at least one additional monomer which is employed in forming the grafted portion is preferably selected from the group consisting of acrylonitrile, methacrylonitrile, alkyl methacrylates, maleic anhydride, maleimide, alkyl maleimides and aryl maleimides. In a preferred embodiment, the grafted portion is formed from a styrene monomer and acrylonitrile, with the styrene and acrylonitrile being employed in a weight ratio of at least about 1:1, and more preferably, at least about 3:1.

The graft copolymer may be formed by any of the methods well known in the art for the formation of ABS graft copolymers. For example, the graft copolymer may be formed by emulsion polymerization wherein the at least one styrene monomer and the at least one additional monomer are polymerized in the presence of the rubber substrate. As is well known in the art, such a process often results in the formation of the grafted copolymer and an additional polymer of the at least one styrene monomer and the at least one additional monomer, which copolymer does not contain the rubber substrate. Within the terms of the present specification and claims, reference to the graft copolymer includes such mixtures of the graft copolymer and an additional copolymer formed from the grafting monomers.

The third component included in the blend compositions comprises a carboxy functional-styrene-acrylonitrile polymer formed from an ethylenically unsaturated carboxylic acid, styrene and acrylonitrile. The styrene may be replaced in whole or in part by other vinyl aromatic monomers, such as alpha methyl styrene, chloro-styrene, bromostyrene, p-methyl styrene and vinyl toluene. The carboxy functional-styrene-acrylonitrile polymer is included in the blend in an amount sufficient to reduce the gloss of the blend and is present at a level of from 5 to 40 weight percent, preferably 5 to 25 weight percent based on the total weight of the blend composition. The acrylonitrile component may be replaced in whole or in part by methacrylonitrile.

Suitable ethylenically unsaturated carboxylic acids include methacrylic acid, acrylic, maleic, fumaric, itaconic, aconitic and crotonic acids and also the mono-esters of maleic, fumaric, itaconic and aconitic acids. Other monomers include the acrylic acid, methacrylic acid and the metal, in particular alkai metal, salts and ammonium salts thereof, maleic acid, metal salts of the acid monoethyl ester of maleic acid, fumaric acid, monoethyl fumarate, itaconic acid, vinylbenzoic acid, vinylphthalic acid, salts of monoethyl fumarate, monoesters of maleic acid, fumaric acid and itaconic acid with alcohols ROH, where R has up to 29 carbon atoms, eg. methyl, propyl, isopropyl, butyl, isobutyl, hexyl, cyclohexyl, octyl, 2-ethylhexyl, decyl, stearyl, methoxyethyl, ethoxyethyl and hydroxethyl.
The carboxy functional-styrene-acrylonitrile polymer is preferably formed in a continuous polymerization process as is well known in the art. In practice, the preparation of the carboxy functional-styrene-acrylonitrile polymer may be controlled to form a product comprising a mixture of the carboxy functional-styrene-acrylonitrile polymer and styrene-acrylonitrile copolymer. This mixture may be used in the blends of the present invention.

The carboxy functional-styrene-acrylonitrile polymer preferably comprises from 50 to 90 weight percent styrene based on the total weight of the functional polymer, more preferably from 60 to 80 weight percent thereof, and most preferably from 70 to 75 weight percent thereof; preferably comprises acrylonitrile at a level of from 10 to 50 weight percent based on the total weight of the functional polymer, more preferably from 20 to 40 weight percent thereof, and most preferably 25 to 30 weight percent thereof; and preferably comprises, an ethylenically unsaturated carboxylic acid at a level of from 0.5 to 10 weight percent based on the total weight of the functional polymer, more preferably from 1 to 5 weight percent thereof and most preferably 1 to 3 weight percent thereof.

The composition of the present invention preferably comprises from 15 to 80 weight percent aromatic polycarbonate based on the total weight of the composition, more preferably 60 to 75 weight percent thereof and most preferably 60 to 70 weight percent thereof; preferably the ABS resin is present at a level of from 10 to 60 weight percent ABS resin based on the total weight of the composition; more preferably from 10 to 25 percent by weight thereof; and most preferably from 15 to 20 percent by weight thereof; and preferably the carboxy functional-styrene-acrylonitrile polymer is present at a level of from 5 to 40 percent by weight based on the total weight of the composition, more preferably from 5 to 20 percent by weight thereof and most preferably 10 to 15 percent by weight thereof. Total polybutadiene rubber content is preferably at a level of at least 5 percent by weight based on the total weight of the compositions. The compositions may also contain from the ABS resin, or as an additional additive, amounts of non-functional styrene-acrylonitrile copolymer, for example, from 5 to 40 weight percent based on the total weight of the composition.

The thermoplastic compositions of the invention may be produced according to conventional methods employing conventional mixing and compounding apparatus including, for example, single and twin-screw extruders, mixing rolls and internal mixers. The thermoplastic compositions may also include various conventional additives including, among others, stabilizers, lubricants, flow aids, mold release agents, antioxidants, antistatic agents, fillers, glass fibers, pigments and the like.

The thermoplastic compositions according to the present invention are demonstrated by the following example in which parts and percentages are by weight unless otherwise specified. Example A is a comparative example. Examples 1-3 illustrate the present invention.

| Examples | A | 1 | 2 | 3 | 4 |
|---|---|---|---|---|---|
| Polycarbonate | 64.0 | 64.0 | 64.0 | 64.0 | 64.0 |
| ABS | 16.0 | 16.0 | 16.0 | 16.0 | 16.0 |
| nfSAN | 20.0 | ---- | 6.67 | ---- | 10.0 |
| SAN-MAA-3 | ---- | 20.0 | 13.33 | ---- | ---- |
| SAN-MAA-1 | ---- | ---- | ----- | 20.0 | 10.0 |
| Antioxidant | 0.1 | 0.1 | 0.1 | 0.1 | 0.1 |
| Lubricant | 1.0 | 1.0 | 1.0 | 1.0 | 1.0 |

| Izod Impact Strenth, 1/8", Notched | | | | | |
|---|---|---|---|---|---|
| RT | 12.4 | 12.5 | 12.6 | 12.8 | 12.6 |

| Melt Viscosity (Poise), Mobay @ 287,8°C (550°F) | | | | | |
|---|---|---|---|---|---|
| 100 l/Sec | 4939 | 11142 | 10218 | 6563 | 6406 |
| 500 l/Sec | 2444 | 6133 | 5521 | 3421 | 2996 |
| 1000 l/Sec | 1805 | 4742 | 4235 | 2584 | 2159 |

| Gardner Gloss | | | | | |
|---|---|---|---|---|---|
| 60° | 100 | 11 | 16 | 76 | 95 |

The data in columns 1 and 2 suggest that low gloss PC/ABS blends can be obtained by replacing SAN by SAN-MAA-3 completely or partially.

In the example, the polycarbonate is a reaction product bisphenol-A and phosgene, the ABS is a graft polymer containing styrene-acrylonitrile copolymer (75:25 weight ratio S:AN) grafted on butadiene rubber particles, said butadiene rubber being present at a level of 50 weight percent based on the total weight of the ABS graft copolymer, nfSAN is a non-functionalized styrene-acrylonitrile copolymer having 75 wt% S and 25 wt% AN, SAN-MAA is a terpolymer of styrene, acrylonitrile and methacrylic acid wherein SAN-MAA-3 comprises approximately 73 wt% S, 24 wt% AN and 3 wt% MAA and wherein SAN-MAA-1 comprise approximately 74 weight percent S, 25 weight percent AN and 1 weight percent MMA; a hindered phenolic antioxidant was present at a level of 0.1 percent is supplied under the trademark Irganox 3114 by Ciba-Geigy Corporation and a lubricant is present at a level of 1.0 weight percent and was supplied under the trademark Glycolube P. The SAN-MAA was prepared by a flex bulk process.

The blends of examples A, 1, 2, 3 and 4 were compounded at 287,8°C (550°F) and 200 rpm on a 34 mm Leistritz twin screw extruder and then the blends were injection molded at 287,8°C (550°F) with 65,5°C (150°F) mold temperatures.

## Claims

1. A thermoplastic blend composition, comprising:
(a) an aromatic polycarbonate polymer;
(b) a graft copolymer comprising a diene rubber substrate and a styrene-acrylonitrile polymeric graft portion grafted thereto; and
(c) from 5 to 40 weight percent based on the total weight of the composition of a carboxy functional-styrene-acrylonitrile polymer comprising structural units derived from an ethylenically unsaturated carboxylic acid.

2. A thermoplastic blend composition as defined by claim 1 wherein said aromatic polycarbonate polymer is present at a level of from 15 weight percent to 80 weight percent based on the total weight of the composition and said graft copolymer is present at a level of from 10 to 60 weight percent based on the total weight of said composition.

3. A thermoplastic blend composition as defined by claim 1 or claim 2 wherein said aromatic polycarbonate polymer is present at a level of from 60 weight percent to 75 weight percent based on the total weight of the composition, said graft copolymer is present at a level of from 10 to 25 weight percent based on the total weight of said composition and said carboxy functional-styrene-acrylonitrile polymer is present at a level of from 5 to 20 weight percent based on the total weight of the composition.

4. A thermoplastic blend composition as defined by any preceding claim wherein said rubber substrate comprises polybutadiene rubber and said graft portion consists essentially of styrene-acrylonitrile copolymer.

5. The composition of any preceding claim further comprising non-functional styrene-acrylonitrile polymer.

6. The composition of any preceding claim wherein said rubber substrate is present at a level of from 40 to 75 weight percent based on the total weight of the graft copolymer.

7. A thermoplastic blend composition consisting essentially of:
(a) an aromatic polycarbonate polymer;
(b) a graft copolymer comprising a polybutadiene rubber substrate and a styrene-acrylonitrile copolymer portion grafted thereon;
(c) a styrene-acrylonitrile polymer; and
(d) from 5 to 40 weight percent based on the total weight of the composition of a carboxy functional-styrene-acrylonitrile polymer comprising structural units derived from an ethylenically unsaturated carboxylic acid.

8. A composition as in any preceding claim, in which said carboxy functional styrene-acrylonitrile polymer is a methacrylic acid-styrene-acrylonitrile terpolymer.

## Patentansprüche

1. Thermoplastische Mischungs-Zusammensetzung, umfassend:
(a) ein aromatisches Polycarbonatpolymer;
(b) ein Pfropfcopolymer, umfassend ein Dienkautschuk-Substrat und einen polymeren Styrol-Acrylnitril-Propfteil, der darauf gepfropft ist, und
(c) von 5 bis 40 Gew.-%, bezogen auf das Gesamtgewicht der Zusammensetzung, eines carboxy-funktionellen Styrol-Acrylnitril-Polymers, umfassend strukturelle Einheiten, die von einer ethylenisch ungesättigten Carbonsäure abgeleitet sind.

2. Thermoplastische Mischungs-Zusammensetzung nach Anspruch 1, worin das aromatische Polycarbonatpolymer in einer Menge von 15 Gew.-% bis 80 Gew.-%, bezogen auf das Gesamtgewicht der Zusammensetzung, vorhanden ist, und das Pfropfcopolymer in einer Menge von 10 bis 60 Gew.-%, bezogen auf das Gesamtgewicht der Zusammensetzung, vorhanden ist.

3. Thermoplastische Mischungs-Zusammensetzung nach Anspruch 1 oder 2, worin das aromatische Polycarbonatpolymer in einer Menge von 60 Gew.-% bis 75 Gew.-%, bezogen auf das Gesamtgewicht der Zusammensetzung, das Pfropfcopolymer in einer Menge von 10 bis 25 Gew.-%, bezogen auf das Gesamtgewicht der Zusammensetzung, und das carboxy-funktionelle Styrol-Acrylnitril-Polymer in einer Menge von 5 bis 20 Gew.-%, bezogen auf das Gesamtgewicht der Zusammensetzung, vorhanden ist.

4. Thermoplastische Mischungs-Zusammensetzung nach einem vorhergehenden Anspruch, worin das Kautschuksubstrat Polybutadienkautschuk umfasst und der Pfropfteil im Wesentlichen aus Styrol-Acrylnitril-Copolymer besteht.

5. Zusammensetzung nach einem vorhergehenden Anspruch, weiter umfassen nicht-funktionelles Styrol-Acrylnitril-Polymer.

6. Zusammensetzung nach einem vorhergehenden Anspruch, worin das Kautschuksubstrat in einer Menge von 40 bis 75 Gew.-%, bezogen auf das Gesamtgewicht der Pfropfcopolymers, vorhanden ist.

7. Thermoplastische Mischungs-Zusammensetzung, bestehend im Wesentlichen aus:
(a) einem aromatischen Polycarbonatpolymer;
(b) einem Pfropfcopolymer, umfassend ein Polybutadienkautschuk-Substrat und einen darauf gepfropften Styrol-Acrylnitril-Copolymerteil;
(c) ein Styrol-Acrylnitril-Polymer und
(d) von 5 bis 40 Gew.-%, bezogen auf das Gesamtgewicht der Zusammensetzung, eines carboxy-funktionellen Styrol-Acrylnitril-Polymers, umfassend strukturelle Einheiten, die von einer ethylenisch ungesättigten Carbonsäure abgeleitet sind.

8. Zusammensetzung nach einem vorhergehenden Anspruch, bei dem das carboxy-funktionelle Styrol-Acrylnitril-Polymer ein Methacrylsäure-Styrol-Acrylnitril-Terpolymer ist.

## Revendications

1. Composition thermoplastique qui est un mélange comprenant:
(a) un polycarbonate aromatique,
(b) un copolymère greffé, comprenant un squelette constitué d'un caoutchouc diène et une partie greffée constituée d'un polymère de styrène et d'acrylonitrile, greffée sur ledit squelette, et
(c) 5 à 40 % en poids par rapport au poids total de la composition, d'un polymère de styrène et d'acrylonitrile à groupes fonctionnels carboxyliques, comprenant des motifs issus d'un acide carboxylique éthyléniquement insaturé.

2. Composition thermoplastique selon la revendication 1, dans laquelle ledit polycarbonate aromatique est présent à raison de 15 % en poids à 80 % en poids par rapport au poids total de la composition et ledit copolymère greffé est présent à raison de 10 % en poids à 60 % en poids par rapport au poids total de la composition.

3. Composition thermoplastique selon la revendication 1 ou 2, dans laquelle ledit polycarbonate aromatique est présent à raison de 60 % en poids à 75 % en poids par rapport au poids total de la composition, ledit copolymère greffé est présent à raison de 10 à 25 % en poids par rapport au poids total de la composition et ledit polymère de styrène et d'acrylonitrile à groupes fonctionnels carboxyliques est présent à raison de 5 à 20 % en poids par rapport au poids total de la composition.

4. Composition thermoplastique selon l'une quelconque des revendications précédentes, pour laquelle ledit squelette constitué de caoutchouc comprend un caoutchouc polybutadiène et ladite partie greffée est constituée essentiellement d'un copolymère de styrène et d'acrylonitrile.

5. Composition selon l'une quelconque des revendications précédentes, qui comprend en outre un polymère de styrène et d'acrylonitrile, sans groupes fonctionnels.

6. Composition selon l'une quelconque des revendications précédentes, dans laquelle ledit squelette de caoutchouc est présent à raison de 40 à 75 % en poids par rapport au poids total du copolymère greffé.

7. Composition thermoplastique qui est un mélange constitué essentiellement de :
(a) un polycarbonate aromatique,
(b) un copolymère greffé comprenant un squelette constitué d'un caoutchouc polybutadiène et une partie constituée d'un copolymère de styrène et d'acrylonitrile, greffée sur ledit squelette,
(c) un polymère de styrène et d'acrylonitrile, et
(d) 5 à 40 % en poids par rapport au poids total de la composition, d'un polymère de styrène et d'acrylonitrile à groupes fonctionnels carboxyliques, comprenant des motifs issus d'un acide carboxylique éthyléniquement insaturé.

8. Composition selon l'une quelconque des revendications précédentes, dans laquelle ledit polymère de styrène et d'acrylonitrile, à groupes fonctionnels carboxyliques, est un terpolymère de styrène, d'acrylonitrile et d'acide méthacrylique.
